## Europäisches Patentamt
## European Patent Office
## Office européen des brevets

(19)

(11) Veröffentlichungsnummer: **0 021 075**
**B1**

(12)

# EUROPÄISCHE PATENTSCHRIFT

(45) Veröffentlichungstag der Patentschrift:
07.07.82

(21) Anmeldenummer: **80102941.4**

(22) Anmeldetag: **27.05.80**

(51) Int. Cl.³: **C 09 B 5/40,** C 09 B 5/28 //
C09B3/10

(54) **Verfahren zur Herstellung eines Küpenfarbstoffs.**

(30) Priorität: **28.06.79 DE 2926025**

(43) Veröffentlichungstag der Anmeldung:
**07.01.81 Patentblatt 81/1**

(45) Bekanntmachung des Hinweises auf die Patenterteilung:
**07.07.82 Patentblatt 82/27**

(84) Benannte Vertragsstaaten:
**CH DE FR GB IT LI**

(56) Entgegenhaltungen:
**CH-A-330 131**
**DE-A-1 644 485**
**DE-A-2 018 362**
**DE-B-1 174 926**
**DE-B-2 450 787**
**DE-C-743 592**

(73) Patentinhaber: **BASF Aktiengesellschaft,
Carl-Bosch-Strasse 38, D-6700 Ludwigshafen (DE)**

(72) Erfinder: **Hoch, Helmut, Dr., Waldstrasse 53 C,
D-6706 Wachenheim (DE)**
Erfinder: **Hiller, Heinrich, Dr., Theodor-Heuss-Strasse 11,
D-6706 Wachenheim (DE)**

ACTORUM AG

Verfahren zur Herstellung eines Küpenfarbstoffs

Die Erfindung betrifft einen neuen braunen Küpenfarbstoff auf der Basis 3,9-Di-(1-anthrachinonylamino)-benz[d,e]-anthron sowie ein Verfahren zu seiner Herstellung.

3,9-Di-(1-anthrachinonylamino)-benz[d,e]-anthron wird durch Reaktion von 3,9-Dibrombenz[d,e]-anthron und 1-Aminoanthrachinon im Verhältnis 1:2 Mol erhalten (BIOS Report 987, Seite 76; FIAT Report 1313 II, Seite 142, US-PS 3 138 613 und 3 238 231).

Dieses Benzanthronderivat ist Ausgangsprodukt für verschiedene wertvolle Küpenfarbstoffe, deren Struktur nur zu einem Teil bekannt ist. Mit diesen Farbstoffen werden auf Baumwolle Färbungen in Oliv- bis Olivbrauntönen erhalten.

C.J. Vat Black 25 (C.J. No. 69 525), ein bekannter Olivfarbstoff wird aus 3,9-Di-(1-anthrachinonylamino)-benz[d,e]-antrhon durch intramolekulare Kondensation in alkoholischer Kalilauge (BIOS Report 987, S. 76; JP-AS 72/44 531) oder in glykolischer Kalilauge (DE-OS 16 44 485; US-PS 3 418 321 und 3 446 810) erhalten.

Wird der so erhaltene Olivfarbstoff einer Schmelze, die Aluminiumchlorid, Flussmittel und halogenierend wirkende Mittel enthält, unterzogen (DE-PS 24 50 787, DE-OS 18 13 729, DE-PS 743 592 und 1 039 162), so erhält man wertvolle Küpenfarbstoffe, die Baumwolle in echten Olivfarbtönen färben.

Wird 3,9-Di-(1-anthrachinonylamino)-benz[d,e]-anthron – im folgenden auch als Dianthrimid bezeichnet – in einer Natrium-Kaliumhydroxid-Schmelze auf 270°C erhitzt, so erhält man Küpenfarbstoffe, die auf Baumwolle Färbungen in gelbstichigen Olivtönen geben (DE-PS 1 769 603). Insgesamt gesehen ergibt sich, dass das Dianthrimid durch alkalische Kondensation fast ausschliesslich Olivfarbstoffe liefert.

Weiterhin ist aus der Patentliteratur bekannt, das Dianthrimid in Gegenwart von Friedel-Crafts-Katalysatoren oder unter sauren Bedingungen zu kondensieren. So erhält man aus dem Dianthrimid in Aluminiumchlorid, Harnstoff und Pyridin oder Picolin enthaltenden Schmelzen in Gegenwart von Chlorierungsmitteln bei Temperaturen zwischen 50 und 200°C rotbraune Küpenfarbstoffe (DE-OS 20 18 362). Ähnliche Umsetzungen werden in der JP-OS 72/35 382 und der JP-AS 75/001 575 beschrieben.

Aus der JP-OS 73/76 928 ist bekannt, dass aus dem Dianthrimid mit Aluminiumchlorid und Phosphorpentachlorid in Gegenwart oder Abwesenheit von N-enthaltenden heterocyclischen Verbindungen braune Küpenfarbstoffe erhalten werden.

Obwohl braune Küpenfarbstoffe auf dieser relativ kostengünstigen Basis gute Chancen im Markt haben sollten, ist bis heute keiner der durch saure Kondensation und mit halogenierenden Mitteln aus den Dianthrimid erhältlichen Farbstoffe im Markt anzutreffen. Die Untersuchung der nach DE-OS 20 18 362 oder der JP-OS 73/76 928 durch saure Kondensation des Dianthrimids erhältlichen Farbstoffen ergab, dass die mit diesen Verfahrensprodukten erhaltenen Färbungen eine gute Wasch- und Sodakochechtheit, eine gerade noch genügende Hypochloritbleichechtheit, jedoch nur eine mässige Lichtechtheit aufweisen. Die Lichtechtheit liegt beim Fade-O-meter-Test bei diesen Farbstoffen um etwa 3 Lichtechtheitsstufen unter der von Rotbraun- und Braunfarbstoffen des Handels und damit des Standes der Technik. Diese Mängel sind schwerwiegende Nachteile für die aus dem Dianthrimid durch saure Kondensation erhältlichen Farbstoffe, weshalb solche Farbstoffe nicht im Markt angetroffen werden.

Aufgabe der vorliegenden Erfindung war es, auf der Basis von den durch saure Schmelzen von 3,9-Di-(1-antrachinonylamino)-benz[d,e]-anthron erhältlichen, nicht lichtechten braunen Küpenfarbstoff Küpenfarbstoffe von hohem coloristischem Wert herzustellen.

Es wurde gefunden, dass man einen Küpenfarbstoff von hohem coloristischem Wert aus dem durch Erwärmen von 3,9-Di-(1-anthrachinonylamino)-benz-[d,e]-anthron in einer Schmelze aus Aluminiumchlorid und Picolin, Chinolin oder Gemischen davon und in Gegenwart von Sulfurylchlorid oder Thionylchlorid auf 110 bis 140°C erhaltenen Kondensationsprodukt erhält, wenn man das isolierte Kondensationsprodukt in einer alkoholischen oder glykolischen Alkalimetallhydroxidschmelze oder einer wässrig-glykolischen Alkalimetallhydroxidschmelze auf Temperaturen zwischen 100 und 180°C erwärmt, wobei man in der Schmelze als alkoholische und glykolische Bestandteile $C_1$- bis $C_4$-Alkanole, Äthylenglykol, Di-, Tri- oder Polyäthylenglykol, Propylenglykol, Di-, Tri- oder Polypropylenglykol oder die Mono-$C_1$- bis $C_4$-Alkyläther der genannten Glykole verwendet.

Der neue Küpenfarbstoff ist sehr farbstark und gibt Färbungen in einem klaren braunen (nicht rotbraunen) Farbton. Die Färbungen zeichnen sich durch gute Wasch- und Sodakochechtheit, gute Bügel- und Wassertropfenechtheit, gute Peroxidwaschechtheit, genügende Hypochloritbleichechtheit und gute Lichtechtheit aus.

Der neue Farbstoff ist im Farbton und in den Echtheiten der damit erhaltenen Färbungen deutlich vom Ausgangsstoff (Kondensationsprodukt oder Vorstufe) zu unterscheiden. So ist die Lichtechtheit der mit dem neuen Farbstoff erhaltenen Färbungen bei gleicher Farbtiefe um 2 bis 2,5 Stufen besser als die der Vorstufe. Dieses Ergebnis war nicht zu erwarten.

Der neue Küpenfarbstoff wird so hergestellt, dass man das Kondensationsprodukt (Vorstufe) in eine alkoholische oder glykolische Alkalimetallhydroxidschmelze einträgt und auf Temperaturen zwischen 100 und 180°C erwärmt. Als Alkohole kommen für die alkoholischen Alkalimetallhydroxidschmelzen $C_1$- bis $C_4$-Alkanole wie Me-

thanol, Äthanol und die Butanole in Betracht, für die glykolischen Alkalimetallhydroxidschmelzen die im folgenden genannten Glykole und Glykolhalbäther. Im einzelnen sind als Schmelzen z.B. methanolische, äthanolische Kalilauge, isobutanolische Kalilauge in Gegenwart von Natriumacetat, zu nennen, wie sie z.B. in BIOS Report 987, S. 76, der US-PS 3 238 231 oder der JP-AS 72/44 531 beschrieben werden.

Vorzugsweise erfolgt die Umsetzung des Ausgangsstoffs (Kondensationsprodukts) in wässrig-glykolischen Alkalimetallhydroxidschmelzen. Hierzu geht man so vor, dass man den gemahlenen Ausgangsstoff in eine Schmelze aus Alkalimetallhydroxid oder einer konzentrierten wässrigen Lösung eines Alkalimetallhydroxids, mit Glykol oder Glykolhalbäthern und gegebenenfalls Natriumacetat einträgt. Je Gew.-Teil Ausgangsstoff benötigt man 1 bis 5 Gew.-Teile Alkalimetallhydroxid, vorzugsweise Natrium- oder Kaliumhydroxid, 0,5 bis 3 Gew.-Teile an Glykolen oder partiell verätherten Glykolen und gegebenenfalls 0,1 bis 0,3 Gew.-Teile Natriumacetat. Die Schmelze wird dann auf Temperaturen zwischen 100 und 180°C, vorzugsweise zwischen 120 und 150°C erwärmt. Nach 2 bis 6 Std. ist die Reaktion beendet.

Als glykolische Bestandteile kommen für die wässrig-glykolischen Alkalimetallhydroxidschmelze Glykole und partiell verätherte Glykole z.B. Äthylenglykol, Di-, Tri- und Polyäthylenglykole, Propylenglykole, Di-, Tri- und Polypropylenglykole sowie die Mono-$C_1$- bis $C_4$-alkyläther dieser Verbindungen wie Diäthylenglykolmonomethyläther, Diäthylenglykolmonopropyläther oder Diäthylenglykolmonobutyläther oder Gemische davon in Betracht.

Die Schmelze wird nach Beendigung der Reaktion in Wasser eingetragen und gegebenenfalls vorhandene reduzierte Anteile des Farbstoffs mit Oxidationsmitteln wie Luft, Wasserstoffperoxid oder Salze der Nitrobenzolsulfonsäure bei 60 bis 80°C oxidiert.

Der Küpenfarbstoff wird aus der wässrigen Suspension in üblicher Weise isoliert, z.B. durch Filtrieren und Neutralwaschen. Der erhaltene Küpenfarbstoff enthält etwa 0,1 bis 3 Gew.-% Chlor und 1 bis 5 Gew.-% organisch gebundenen Schwefel. Der Farbstoff kann in Form des Presskuchens oder nach dem Trocknen in die für die Anwendung erforderliche Form gebracht werden.

Die für den neuen Küpenfarbstoff benötigte Vorstufe (Ausgangsstoff) wird aus 3,9-Di-(1-anthrachinonylamino)-benz[d,e]-anthron (= Dianthrimid) nach dem in der DE-OS 20 18 362 beschriebenen Verfahren in einer Schmelze aus Aluminiumchlorid und Picolin und/oder Chinolin in Gegenwart eines Chlorierungsmittels hergestellt. Um die Schmelze flüssiger zu halten, können der Schmelze noch Formiate oder Formamide (DE-PS 878 647, DE-OS 24 50 787) oder Harnstoff zugegeben werden.

Je Gew.-Teil Dianthrimid verwendet man vorteilhafterweise für die Schmelze 5 bis 10 Gew.-Teile Aluminiumchlorid (wasserfrei) und 0,5 bis 3 Gew.-Teile Picolin und/oder Chinolin oder eine Mischung aus 0,1 bis 2 Gew.-Teilen Harnstoff und 1 bis 2 Gew.-Teilen Picolin und/oder Chinolin. Ausserdem werden der Schmelze noch 0,1 bis 0,3 Gew.-Teile Sulfurylchlorid oder Thionylchlorid zugegeben. Die Temperatur in der Schmelze liegt zwischen 110 und 140°C. Nach Beendigung der Reaktion, dies ist im allgemeinen nach 1 bis 5 Stunden der Fall, wird die Schmelze in bekannter Weise aufgearbeitet. Vorteilhafterweise wird die Schmelze durch Eintragen in wässrige Salzsäure zersetzt und die erhaltene Suspension filtriert, das Filtergut mit Wasser neutralgewaschen und getrocknet. Das so erhaltene Produkt ist nach dem Mahlen für die Umsetzung zum neuen Farbstoff geeignet.

Je nach der in der Aluminiumchloridschmelze verwendeten Stickstoffbase erhält man ein Kondensationsprodukt, aus dem nach dem erfindungsgemässen Verfahren Küpenfarbstoffe entstehen, die neutrale bis stark gelbstichige Braunfärbungen liefern.

So erhält man in der Aluminiumchlorid/Picolin-Schmelze einen Ausgangsstoff, der Küpenfarbstoffe gibt, die neutrale braune Färbungen liefern. Demgegenüber gibt das Kondensationsprodukte der Aluminiumchlorid/Chinolin-Schmelze Küpenfarbstoffe, die stark gelbstichige Braunfärbungen liefern. Letztere liegen dem Farbton von Vat Brown 46; C.I. Nr. 70 905 sehr nahe. Der Farbstoff der vorliegenden Erfindung ist jedoch in der Brillanz und in der Farbstärke diesem Farbstoff des Standes der Technik deutlich überlegen.

Die folgenden Ausführungsbeispiele sollen die Erfindung zusätzlich erläutern. Die im folgenden genannten Teile und Prozentangaben beziehen sich auf das Gewicht.

Beispiel 1

a) Ausgangsstoff: Zu 750 Teilen wasserfreiem Aluminiumchlorid werden 50 Teile Harnstoff und 100 Teile 3-Picolin so zugegeben, dass die Temperatur 140°C nicht überschreitet. Dann werden bei 110°C zu der dünnflüssigen Schmelze 15 Teile Sulfurylchlorid in 15 Minuten gegeben und die Mischung 30 Minuten bei 120°C nachgerührt. Anschliessend werden in 1 Stunde bei 120°C 45 Teile gemahlenes 3,9-Di-(1-anthrachinonylamino)-benz[d,e]-anthron eingetragen und die Mischung noch 2 Stunden bei 120 bis 125°C nachgerührt. Die Schmelze wird in 5000 Teile Eiswasser und 50 Teile Salzsäure (30%ig) eingetragen und 1 Stunde gerührt. Danach wird das Farbstoffvorprodukt filtriert, mit warmem Wasser neutralgewaschen und bei 100°C getrocknet. Man erhält 49 Teile eines braunen Produktes, das nach der Trocknung gemahlen wird.

b) 49 Teile des nach a) erhaltenen Produktes werden in ein Gemisch aus 140 Teilen Natronlauge (50%ig wässrig), 90 Teilen Diäthylenglykolmonomethyläther, 10 Teilen Natriumacetat und 70 Teilen Wasser in 20 Minuten eingetragen. Die Mischung wird anschliessend auf 130°C erhitzt und bei dieser Temperatur 4 Stunden gerührt. Die so erhaltene Schmelze wird dann in 5000 Teile Wasser, das 25 Teile des Natrium-Salzes der m-Nitrobenzolsulfonsäure gelöst enthält, eingetragen. Die Suspension wird 2 Stunden bei 80°C nachgerührt, abgesaugt, das Filtergut neutralgewaschen und getrocknet. Ausbeute: 49 Teile eines braunen Küpenfarbstoffs, der Baumwolle in neutralen braunen Farbtönen anfärbt. Die Färbungen zeichnen sich durch gute Echtheiten und durch hohe Farbstärken aus.

Beispiel 2

a) Ausgangsstoff: Zu 750 Teilen wasserfreiem Aluminiumchlorid werden 150 Teile 3-Picolin zugegeben (Temperatur 130°C) und anschliessend 15 Teile Sulfurylchlorid zugetropft. Die Mischung wird zunächst 30 Minuten auf 140°C erhitzt und dann auf 120°C abgekühlt. Bei dieser Temperatur werden in 45 Minuten 45 Teile gemahlenes 3,9-Di-(1-anthrachinonylamino)-benz[d,e]-anthron eingetragen und die Mischung 1 Stunde bei 125 bis 130°C gerührt. Die Schmelze wird in 10 000 Teile Wasser und 100 Teile Salzsäure (30%ig) eingetragen und die Suspension 1 Stunde gerührt. Danach wird das Farbstoff-Vorprodukt abfiltriert und mit warmem Wasser neutralgewaschen, bei 100°C getrocknet und gemahlen. Ausbeute: 49 Teile Ausgangsstoff in Form eines braunen Pulvers.

b) Farbstoff: 49 Teile des nach a) erhaltenen Pulvers werden in ein Gemisch aus 140 Teilen Natronlauge (50%ig in Wasser), 90 Teilen Polyäthylenglykol (Molekulargewicht 200), 10 Teilen Natriumacetat und 60 Teilen Wasser eingetragen. Die Suspension wird auf 130°C erhitzt und 5 Stunden bei dieser Temperatur gerührt. Die Schmelze wird dann in 5000 Teile Wasser, das 25 Teile m-Nitrobenzolsulfonsäure (Natriumsalz) gelöst enthält, eingetragen. Die Suspension wird noch 2 Stunden bei 80°C gerührt und dann abgesaugt. Das Filtergut wird neutralgewaschen und getrocknet. Ausbeute: 49 Teile eines braunen Küpenfarbstoffs, der Baumwolle in neutralen braunen Farbtönen anfärbt. Die Färbungen zeichnen sich durch gute Echtheiten und durch hohe Farbstärken aus.

Beispiel 3

a) Ausgangsstoff: Zu 750 Teilen wasserfreiem Aluminiumchlorid werden 150 Teile Chinolin so zugegeben, dass die Temperatur 140°C nicht überschreitet. Dann werden bei 110°C zu der dünnflüssigen Schmelze 15 Teile Sulfurylchlorid in 15 Minuten gegeben und die Mischung 30 Minuten bei 140°C nachgerührt. Anschliessend werden bei 120°C in 1 Stunde 75 Teile gemahlenes 3,9-Di-(1-anthrachinonylamino)-benz[d,e]-anthron eingetragen und die Mischung noch 2 Stunden bei 120 bis 125°C nachgerührt. Die Schmelze wird in 5000 Teile Eiswasser und 50 Teile Salzsäure (30%ig) eingetragen und 1 Stunde gerührt. Danach wird das Farbstoffvorprodukt filtriert, mit warmem Wasser neutralgewaschen und bei 100°C getrocknet. Man erhält 78 Teile eines braunen Produkts, das nach dem Trocknen gemahlen wird.

b) 49 Teile des nach a) erhaltenen Produkts werden in ein Gemisch aus 210 Teilen Natronlauge (50%ig wässrig), 90 Teilen Diäthylenglykolmonomethyläther und 10 Teilen Natriumacetat in 20 Minuten eingetragen. Die Mischung wird anschliessend auf 140°C erhitzt und bei dieser Temperatur 5 Stunden gerührt. Die Schmelze wird dann in 5000 Teile Wasser, das 25 Teile des Natrium-Salzes der m-Nitrobenzolsulfonsäure gelöst enthält, eingetragen. Die Suspension wird 2 Stunden bei 80°C nachgerührt, abgesaugt, das Filtergut neutralgewaschen und getrocknet. Ausbeute: 48 Teile eines braunen Küpenfarbstoffs, der Baumwolle in braunen Farbtönen anfärbt, die deutlich gelber sind, als die mit den nach Beispiel 1 und 2 erhaltenen Farbstoffe. Die Färbungen zeichnen sich durch gute Echtheiten und durch hohe Farbstärken aus.

**Patentansprüche**

1. Verfahren zur Herstellung eines Küpenfarbstoffs aus dem durch Erwärmen von 3,9-Di-(1-anthrachinonylamino)-benz[d,e]-anthron in einer Schmelze aus Aluminiumchlorid und Picolin, Chinolin oder Gemischen davon in Gegenwart von Sulfurylchlorid oder Thionylchlorid auf 110 bis 140°C erhaltenen Kondensationsprodukt, dadurch gekennzeichnet, dass man das isolierte Kondensationsprodukt in einer alkoholischen, einer glykolischen oder einer wässrig-glykolischen Alkalimetallhydroxidschmelze auf Temperaturen zwischen 100 und 180°C erwärmt, wobei man in der Schmelze als alkoholische und glykolische Bestandteile $C_1$- bis $C_4$-Alkanole, Äthylenglykol, Di-, Tri- oder Polyäthylenglykol, Propylenglykol, Di-, Tri- oder Polypropylenglykol oder die Mono-$C_1$- bis $C_4$-Alkyläther der genannten Glykole verwendet.

2. Verfahren nach Anspruch 1, dadurch gekennzeichnet, dass man eine wässrig glykolische Alkalimetallhydroxidschmelze anwendet.

3. Verfahren gemäss Anspruch 2, dadurch gekennzeichnet, dass man als glykolische Bestandteile Äthylenglykol, Di-, Tri- oder Polyäthylenglykol, Propylenglykol, Di-, Tri- oder Polypropylenglykol oder die Mono-$C_1$- bis $C_4$-alkyläther der genannten Glykole verwendet.

4. Verfahren gemäss den Ansprüchen 1 bis 3, dadurch gekennzeichnet, dass man die Schmelze auf Temperaturen zwischen 120 und 150°C erwärmt.

5. Verfahren gemäss Anspruch 1 bis 4, dadurch gekennzeichnet, dass die Schmelze je Gew.-Teil Ausgangsstoff 1 bis 5 Gew.-Teile Alkalimetallhydroxid 0,5 bis 3 Gew.-Teile Glykole oder partiell verätherte Glykole und gegebenenfalls 0,1 bis 0,3 Gew.-Teile Natriumacetat enthält.

# Claims

1. A process for the production of a vat dye from the condensation product obtained by heating 3,9-di-(1-anthraquinonylamino)-benz[d,e]anthrone in a melt of aluminium chloride and picoline or quinoline or a mixture of these in the presence of sulfuryl chloride or thionyl chloride at from 110 to 140°C, characterized in that the isolated condensation product is heated at from 100 to 180°C in a melt of an alkali metal hydroxide in an alcohol or a glycol or an aqueous glycol, $C_1$–$C_4$-alkanols, ethylene glycol, diethylene glycol, triethylene glycol, polyethylene glycol, propylene glycol, dipropylene glycol, tripropylene glycol, polypropylene glycol or the mono-$C_1$–$C_4$-alkyl ethers of the said glycols being used as alcohol and glycol constituents in the melt.

2. A process as claimed in claim 1, characterized in that a melt of an alkali metal hydroxide in an aqueous glycol is used.

3. A process as claimed in claim 2, characterized in that ethylene glycol, diethylene glycol, triethylene glycol, polyethylene glycol, propylene glycol, dipropylene glycol, tripropylene glycol, polypropylene glycol or the mono-$C_1$–$C_4$-alkyl ethers of the said glycols are used as glycol constituents.

4. A process as claimed in claims 1 to 3, characterized in that the melt is heated at from 120 to 150°C.

5. A process as claimed in claims 1 to 4, characterized in that the melt contains from 1 to 5 parts by weight of alkali metal hydroxide and from 0.5 to 3 parts by weight of glycols or partially etherified glycols, with or without from 0.1 to 0.3 part by weight of sodium acetate, per part by weight of starting material.

# Revendications

1. Procédé de préparation d'un colorant de cuve à partir du produit de condensation obtenu par chauffage de la 3,9-di-(1-anthraquinonylamino)-benzo[d,e]-anthrone dans une masse fondue de chlorure d'aluminium et de picoline, de quinoléine ou leurs mélanges en présence de chlorure de sulfuryle ou de chlorure de thionyle à une température de 110 à 140°C, caractérisé en ce que l'on chauffe le produit de condensation isolé à des températures de 100 à 180°C dans une masse fondue alcoolique, glycolique ou hydro-glycolique d'hydroxyde de métal alcalin, les constituants alcooliques et glycoliques de la masse fondue consistant en alcanols en $C_1$–$C_4$, éthylène-glycol, di-, tri- ou poly-éthylène-glycol, propylène-glycol, di-, tri- ou poly-propylène-glycol ou les éthers mono-alkyliques en $C_1$–$C_4$ des glycols mentionnés.

2. Procédé selon la revendication 1, caractérisé en ce que l'on utilise une masse fondue hydro-glycolique d'hydroxyde de métal alcalin.

3. Procédé selon la revendication 2, caractérisé en ce que l'on utilise en tant que constituants glycoliques l'éthylène-glycol, le di-, le tri- ou le poly-éthylène-glycol, le propylène-glycol, le di-, le tri- ou le poly-propylène-glycol ou les mono-éthers alkyliques en $C_1$–$C_4$ des glycols mentionnés.

4. Procédé selon les revendications 1 à 3, caractérisé en ce que l'on chauffe la masse fondue à des températures de 120 à 150°C.

5. Procédé selon les revendications 1 à 4, caractérisé en ce que la masse fondue contient, pour une partie en poids de départ, de 1 à 5 parties en poids d'hydroxyde de métal alcalin, de 0,5 à 3 parties en poids de glycols ou de glycols partiellement éthérifiés et le cas échéant de 0,1 à 0,3 partie en poids d'acétate de sodium.